# EUROPEAN PATENT APPLICATION

(11) **EP 4 675 163 A1**
(43) Date of publication of application: **07.01.2026**
(21) Application number: 24763606.1
(22) Date of filing: 14.02.2024
(51) Int. Cl.: F21V 15/01, F21S 45/00

(54) **HOUSING COMPONENT AND METHOD FOR DESTRUCTING HOUSING COMPONENT**

(30) Priority: 28.02.2023 JP 2023030298
(71) Applicant: Koito Manufacturing Co., Ltd., Shinagawa-ku, Tokyo 141-0001 (JP)
(72) Inventor: TOTSUKA, Takahiro, Shizuoka-shi, Shizuoka 424-8764 (JP); OHTSUKA, Yasushi, Shizuoka-shi, Shizuoka 424-8764 (JP)
(74) Representative: Grünecker Patent- und Rechtsanwälte PartG mbB
(86) International application number: PCT/JP2024/004972
(87) International publication number: WO 2024/181123

(57) **Abstract**

Novel features for facilitating removal of a component inside a vehicle lamp are provided. A housing component 42 constitutes a part of a housing for containing a function component for realizing a function of a vehicle lamp. The housing component 42 includes a destructible portion 44 having a structure that facilitates destruction by a predetermined operation of a predetermined tool. The destructible portion 44 is configured to form, by being destructed, an opening portion 46 through which the function component inside the housing can be removed without disassembling the housing.

## Description

### TECHNICAL FIELD

The present invention relates to a technique that makes it easier to destruct part of the components constituting a vehicle lamp.

### BACKGROUND ART

In recent years, developments aimed at carbon neutrality have been progressing in various fields. Therefore, it is desirable to disassemble and sort recyclable and reusable components from components used in a vehicle. For example, Patent Literature 1 discloses a projector-type headlamp that utilizes an LED as a light source. A lamp unit and a lighting circuit device installed in a lamp housing of the headlamp are relatively versatile, and it is desirable to reuse the lamp unit and the lighting circuit device to the extent possible.

### CITATION LIST

### PATENT LITERATURE

Patent Literature 1: JP2019-212485A

### SUMMARY OF INVENTION

### TECHNICAL PROBLEM

However, many components are designed with priority given to ease of assembly and prevention of detachment between assembled components, and are not necessarily designed on the assumption that the components will be disassembled. Therefore, a lot of time and effort are required for disassembling the components, which leads to an increase in recycling costs and a decrease in recycling rates of the components.

For example, the lamp housing described above is formed by integrating a container-shaped lamp body and a light-transmitting front cover by adhesion or welding, and it requires a lot of man-hours to disassemble and take out the lamp unit and a lighting control circuit inside.

The present invention has been made in view of the above circumstances, and one of exemplary objects thereof is to provide a new technique that makes it easier to take out components inside a vehicle lamp.

### SOLUTION TO PROBLEM

To solve the above problem, a housing component according to an aspect of the present invention is a housing component configured to constitute a part of a housing configured to store a functional component for realizing a function of a vehicle lamp, and the housing component includes a destructible portion configured to be destructible by a predetermined operation of a predetermined tool. The destructible portion is configured to form, when being destructed, an opening that allows the functional component inside the housing to be taken out without disassembling the housing.

According to this aspect, the functional component inside the housing can be taken out by the predetermined operation of the predetermined tool without disassembling the housing.

A plurality of destructible portions may be provided at intervals on an outer edge of a region where the opening is to be formed. Accordingly, a large opening can be formed in the housing by performing the predetermined operation of the predetermined tool a plurality of times.

The region where the opening is to be formed has a rectangular shape. The destructible portion may include: a first destructible portion disposed along one side of the region; and a second destructible portion disposed along the other side of the region. Accordingly, the rectangular opening can be easily formed in the housing.

The destructible portion may include: a recess that is recessed from an outer side of the housing component toward an inner side of the housing component, the recess allowing a tip of the predetermined tool to enter; a thin-walled portion that is formed at a base of a protrusion, the protrusion being defined by the recess protruding to the inner side of the housing component; and a force-receiving portion configured to receive a force from the tool when the tool is inclined while the tip of the tool is caught on a bottom of the recess. The thin-walled portion may be configured to break due to the force received by the force-receiving portion. Accordingly, it is possible to control the location to be destructed by disposing the thin-walled portion so as to surround the region to become the opening.

The recess may be a horizontally elongated groove having a width that narrows toward the bottom, and the force-receiving portion may be a linear portion that protrudes from one inclined surface of the groove and extends in a longitudinal direction of the groove.

Another aspect of the present invention relates to a method for destructing a housing component. This method is a method for destructing a housing component configured to constitute a part of a housing configured to store a functional component configured to realize a function of a vehicle lamp, the method including: a step of preparing the housing component including a destructible portion configured to be destructible by a predetermined operation of a predetermined tool; and a step of destructing the destructible portion by tilting the tool while being thrusted into the destructible portion to form an opening that allows the functional component inside the housing to be taken out without disassembling the housing.

According to this aspect, the functional component inside the housing can be taken out by the predetermined operation of the predetermined tool without disassembling the housing.

Any combination of the above components, and a conversion of the expressions of the present invention into a manufacturing method, a device such as a lamp or lighting device, a light-emitting module, a light source, and the like are also valid aspects of the present invention.

### ADVANTAGEOUS EFFECTS OF INVENTION

According to the present invention, components inside a vehicle lamp can be easily taken out.

### BRIEF DESCRIPTION OF DRAWINGS

[Fig. 1] Fig. 1 is a vertical cross-sectional view illustrating a schematic configuration of a vehicle lamp according to an embodiment of the present invention.
[Fig. 2] (a) of Fig. 2 is a front view of a housing component according to the present embodiment, and (b) of Fig. 2 is a rear view of the housing component illustrated in (a) of Fig. 2 as viewed from the opposite side.
[Fig. 3] (a) of Fig. 3 is a cross-sectional view of the housing component illustrated in (a) of Fig. 2 taken along line A-A, and (b) of Fig. 3 is an enlarged view of a region R3 illustrated in (a) of Fig. 3.
[Fig. 4] Fig. 4 is a perspective view illustrating a predetermined operation of a predetermined tool with respect to the housing component according to the present embodiment.
[Fig. 5] Fig. 5 is a cross-sectional perspective view of a main part illustrating a state of destruction in a destructible portion of the housing component according to the present embodiment.

### DESCRIPTION OF EMBODIMENTS

Hereinafter, the present invention will be described based on a preferred embodiment with reference to the drawings. The same or equivalent components, members, and processes illustrated in the drawings are denoted by the same reference numerals, and redundant descriptions thereof will be omitted as appropriate. The embodiment is illustrative rather than limiting the invention, and not all features and combinations thereof described in the embodiment are necessarily essential to the invention.

A housing component according to an embodiment of the present invention is one of the components constituting a vehicle lamp. Hereinafter, a headlamp will be described as an example of the vehicle lamp, but the housing component according to the present embodiment may be used for a rear lamp.

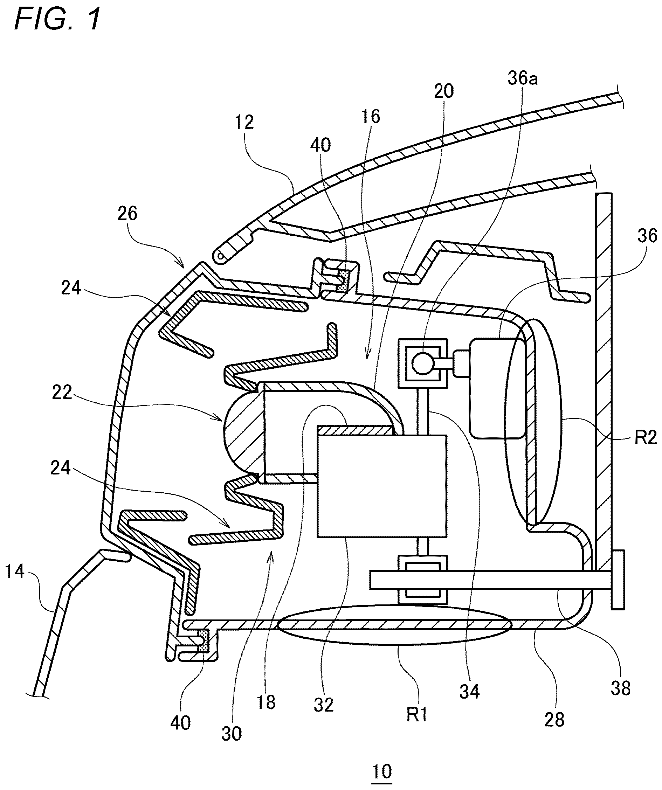

Fig. 1 is a vertical cross-sectional view illustrating a schematic configuration of a vehicle lamp according to the present embodiment. A vehicle lamp 10 illustrated in Fig. 1 is disposed in a space between a vehicle hood 12 and a bumper 14. The vehicle lamp 10 includes a projector-type lamp unit 16 that utilizes an LED as a light source. The lamp unit 16 includes a substrate 18 on which the LED is mounted, a reflector 20 that reflects light emitted upward from the LED toward the front of the lamp, and a projection lens 22 that projects the light reflected by the reflector 20 toward the front of the lamp to form a desired light distribution pattern.

The lamp unit 16 is disposed in a lamp chamber 30 surrounded by an outer lens 26 and a lamp body 28. Between the lamp unit 16 and the outer lens 26, an extension 24 is provided in which the projection lens 22 becomes an opening.

The substrate 18 is mounted on a base member 32 which is integrated with a heat sink and the like. The base member 32 is supported by a leveling bracket 34. An output shaft 36a of a leveling actuator 36 is connected to an upper portion of the leveling bracket 34, and an aiming screw 38 is connected to a lower portion of the leveling bracket 34. The leveling actuator 36 and the aiming screw 38 are directly or indirectly supported by the lamp body 28.

As described above, when functional components such as the lamp unit 16, an LED driver module, and the leveling actuator 36 provided in the lamp chamber 30 are to be reused in accordance with disposal or replacement of the vehicle lamp 10, it is proposed to disassemble the outer lens 26 and the lamp body 28. However, the outer lens 26 and the lamp body 28 according to the present embodiment are firmly joined via a gel adhesive 40. Therefore, a large amount of man-hours (time) are required to disassemble the outer lens 26 and the lamp body 28 by heating or melting the gel adhesive 40. Therefore, as a result of intensive studies, the inventors of the present application have come up with a new structure that makes it easier to take out components inside a vehicle lamp.

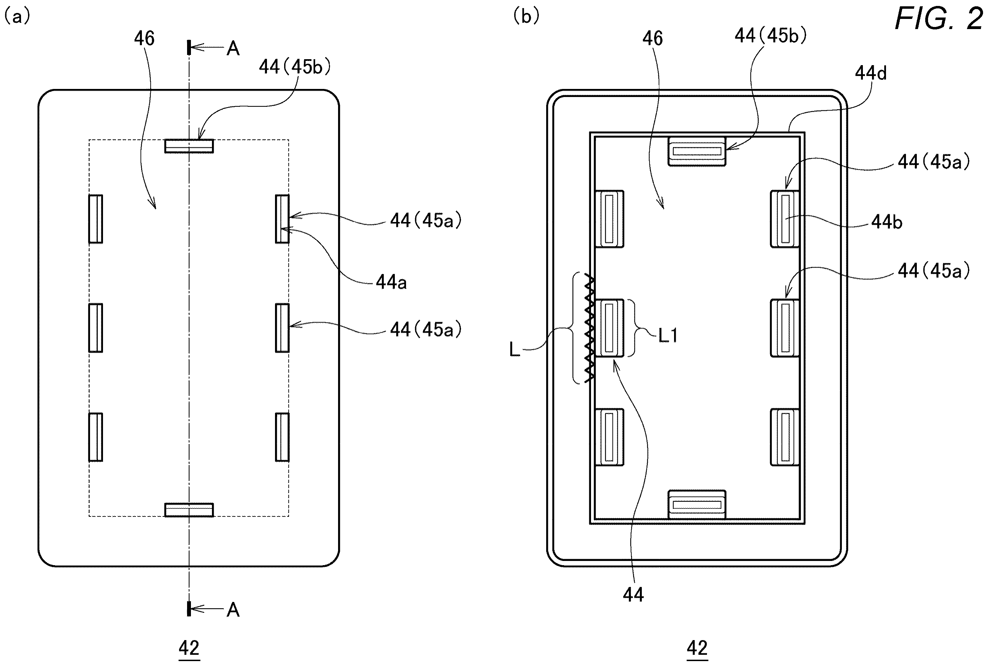

Hereinafter, a new structure provided in the lamp body 28, which is a housing component, will be described. This structure is provided, for example, in a bottom region R1 and a rear region R2 of the lamp body 28 illustrated in Fig. 1. In Fig. 2, (a) of Fig. 2 is a front view of the housing component according to the present embodiment, and (b) of Fig. 2 is a rear view of the housing component illustrated in (a) of Fig. 2 as viewed from the opposite side. For the housing component in each of the following drawings, a main part necessary for describing a destructible portion, which will be described later, is illustrated, and the housing component is not necessarily the same as the actual shape and size of a housing component used in a vehicle lamp.

A housing component 42 illustrated in (a) and (b) of Fig. 2 constitutes a part of a housing that stores functional components (the lamp unit 16, the base member 32, the leveling actuator 36, and the like) for realizing functions of the vehicle lamp 10. The housing component 42 has a destructible portion 44 that is easily destructible by a predetermined operation of a predetermined tool. When the destructible portion 44 is destructed, the destructible portion 44 forms an opening 46 that allows the functional components inside the housing to be taken out without disassembling the housing.

In the housing component 42 according to the present embodiment, a plurality of destructible portions 44 are provided at intervals on an outer edge of a region that becomes the opening 46. Accordingly, a large opening can be formed in the housing by performing the predetermined operation of the predetermined tool a plurality of times. In the housing component 42, the region that becomes the opening 46 is rectangular. The destructible portion 44 includes a first destructible portion 45a disposed along one side of the region that becomes the opening 46, and a second destructible portion 45b disposed along the other side of the region that becomes the opening 46. Accordingly, a rectangular opening 46 can be easily formed in the housing.

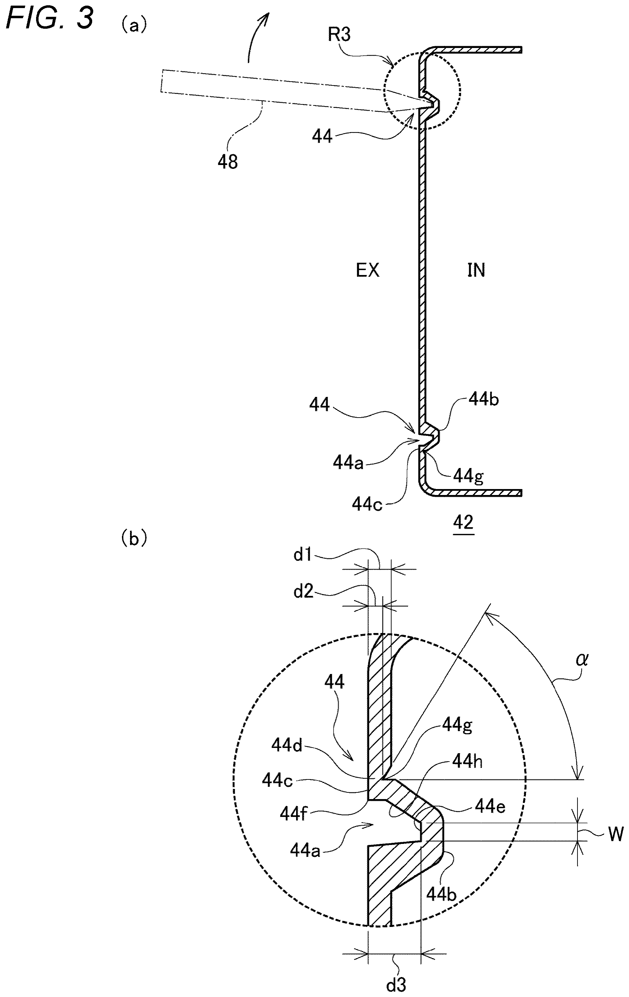

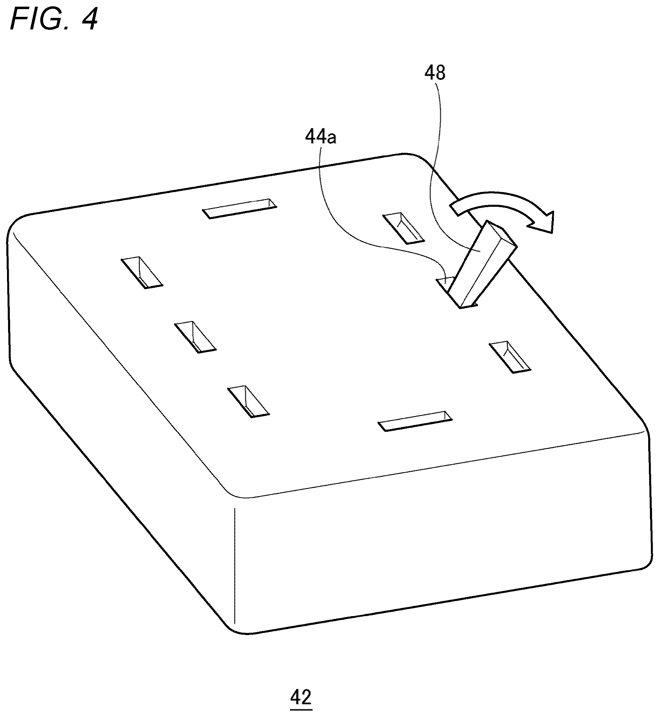

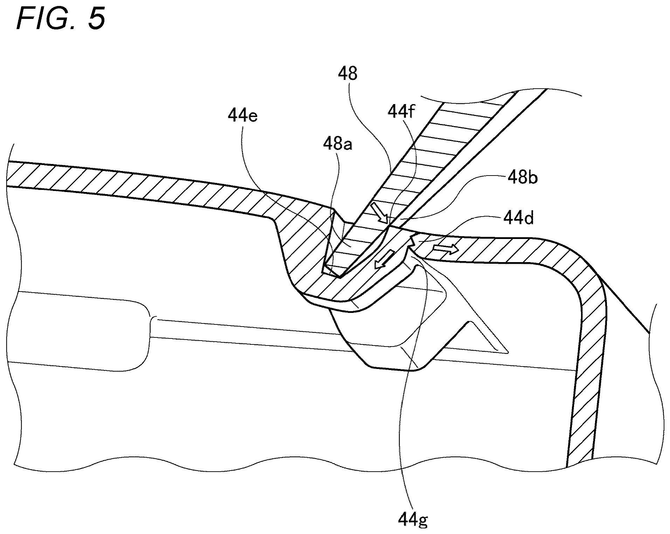

In Fig. 3, (a) of Fig. 3 is a cross-sectional view of the housing component illustrated in (a) of Fig. 2 taken along line A-A, and (b) of Fig. 3 is an enlarged view of a region R3 illustrated in (a) of Fig. 3. Fig. 4 is a perspective view illustrating the predetermined operation of the predetermined tool with respect to the housing component according to the present embodiment. Fig. 5 is a cross-sectional perspective view of a main part illustrating a state of destruction in the destructible portion of the housing component according to the present embodiment.

As illustrated in Figs. 3 to 5, the predetermined tool according to the present embodiment is, for example, a flathead screwdriver 48 having a wedge-shaped tip. By moving the flathead screwdriver 48 in directions illustrated in Figs. 3 and 4, the destructible portion 44 is destructed. That is, the predetermined operation of the predetermined tool is also a method for destructing the housing component 42 constituting a part of a housing that stores functional components for realizing functions of a vehicle lamp. In this method, the housing component 42 having the destructible portion 44 that is easily destructible by a predetermined operation of the flathead screwdriver 48 is prepared, and the flathead screwdriver 48 is thrust into the destructible portion 44 and tilted to destruct a part of the destructible portion 44, thereby forming the opening 46 that allows the functional components inside the housing to be taken out without disassembling the housing.

Next, the structure of the destructible portion 44 will be described in detail with reference to Figs. 2 to 5. The destructible portion 44 includes a recess 44a that is recessed from an outer side EX toward an inner side IN of the housing component 42 and allows a tip 48a of the flathead screwdriver 48 to enter, a thin-walled portion 44d that is formed at a base 44c of a protrusion 44b defined by the recess 44a protruding to the inner side IN of the housing component 42, and a force-receiving portion 44f that receives a force from the flathead screwdriver 48 when the flathead screwdriver 48 is inclined while the tip 48a of the flathead screwdriver 48 is caught on a bottom 44e of the recess 44a. The flathead screwdriver 48 has two flat surfaces whose tips form an acute angle.

Therefore, as illustrated in Fig. 5, the tip 48a of the flathead screwdriver 48 is thrust into the bottom 44e of the recess 44a, and the entire flathead screwdriver 48 is inclined with the tip 48a as a fulcrum. Thus, one flat surface 48b of the two flat surfaces presses against the force-receiving portion 44f. As a result, a tearing force is generated in the thin-walled portion 44d of the destructible portion 44 due to two forces in opposite directions as indicated by arrows, and the thin-walled portion 44d is finally broken.

As described above, the thin-walled portion 44d has a thickness and shape such that the thin-walled portion 44d will break by the force received by the force-receiving portion 44f. In the present embodiment, the thin-walled portion 44d is implemented by a linear notch 44g formed in the inner side IN of the housing component 42. The notch 44g has a wedge-shaped cross section. Accordingly, as illustrated in Fig. 2, the location to be destructed can be controlled by disposing the thin-walled portion 44d so as to surround the region that becomes the opening 46. A length L of the thin-walled portion 44d that is destructed (broken) when the destructible portion 44 is destructed at one location is longer than a length L1 of the destructible portion 44 itself in a longitudinal direction. Therefore, the opening 46 can be formed by destructing the plurality of destructible portions 44 that are scattered. Accordingly, the functional components such as the lamp unit 16, the LED driver module, and the leveling actuator 36 that can be reused can be easily taken out of the lamp chamber 30 from the bottom region R1 or the rear region R2 of the lamp body 28.

The recess 44a is horizontally elongated groove having a width that narrows toward the bottom 44e, and the force-receiving portion 44f is a linear portion that protrudes from one inclined surface 44h of the groove and extends in a longitudinal direction of the groove. A thickness d1 of the housing component 42 according to the present embodiment is in the range of 1.2 mm to 1.8 mm, and a thickness d2 of the thin-walled portion 44d is in the range of 0.5 mm to 1.2 mm. An angle α formed by two surfaces of the wedge-shaped notch 44g is in the range of 45° to 75°. A depth d3 of the recess 44a is in the range of 3 mm to 5 mm, and a width W of a flat portion of the bottom 44e of the recess 44a is 1.0 mm to 1.5 mm. The material of the housing component 42 is, for example, acrylonitrile butadiene styrene (ABS) resin or acrylonitrile styrene acrylate (ASA) resin.

Although the present invention has been described with reference to the above embodiment, the present invention is not limited to the above embodiment, and appropriate combinations and replacements of the configurations of the embodiment are also included in the present invention. Based on the knowledge of those skilled in the art, it is possible to appropriately rearrange the combinations and processing orders in the embodiment, and to make various design changes and other modifications to the embodiment, and embodiments to which such modifications are added are also within the scope of the present invention.

The present international application claims priority based on Japanese Patent Application No. 2023-030298, which is a Japanese patent application filed on February 28, 2023, and the entire contents of Japanese Patent Application No. 2023-030298 are incorporated in the present international application.

The above description of a specific embodiment of the present invention is presented for the purpose of illustration. The above description is not intended to be exhaustive or to limit the present invention to the described aspects as they are. It is apparent to those skilled in the art that many modifications and changes can be made in light of the above description.

### REFERENCE SIGNS LIST

10: vehicle lamp
16: lamp unit
28: lamp body
30: lamp chamber
32: base member
34: leveling bracket
36: leveling actuator
42: housing component
44: destructible portion
44a: recess
44b: protrusion
44c: base
44d: thin-walled portion
44e: bottom
44f: force-receiving portion
44g: notch
44h: inclined surface
45a: first destructible portion
45b: second destructible portion
46: opening
48: flathead screwdriver
48a: tip

## Claims

1. A housing component configured to constitute a part of a housing configured to store a functional component configured to realize a function of a vehicle lamp, the housing component comprising:
a destructible portion configured to be destructible by a predetermined operation of a predetermined tool,
wherein the destructible portion is configured to form, when being destructed, an opening that allows the functional component inside the housing to be taken out without disassembling the housing.

2. The housing component according to claim 1,
wherein a plurality of destructible portions are provided at intervals on an outer edge of a region where the opening is to be formed.

3. The housing component according to claim 2,
wherein the region where the opening is to be formed has a rectangular shape, and
wherein the destructible portion comprises:
a first destructible portion disposed along one side of the region; and
a second destructible portion disposed along another side of the region.

4. The housing component according to any one of claims 1 to 3,
wherein the destructible portion comprises:
a recess that is recessed from an outer side of the housing component toward an inner side of the housing component, the recess allowing a tip of the predetermined tool to enter;
a thin-walled portion that is formed at a base of a protrusion, the protrusion being defined by the recess protruding to the inner side of the housing component; and
a force-receiving portion configured to receive a force from the tool when the tool is inclined while the tip of the tool is caught on a bottom of the recess, and
wherein the thin-walled portion is configured to break due to the force received by the force-receiving portion.

5. The housing component according to claim 4,
wherein the recess is a horizontally elongated groove having a width that narrows toward the bottom, and
wherein the force-receiving portion is a linear portion that protrudes from one inclined surface of the groove and extends in a longitudinal direction of the groove.

6. A method for destructing a housing component configured to constitute a part of a housing configured to store a functional component configured to realize a function of a vehicle lamp, the method comprising:
a step of preparing the housing component comprising a destructible portion configured to be destructible by a predetermined operation of a predetermined tool; and
a step of destructing the destructible portion by tilting the tool while being thrusted into the destructible portion to form an opening that allows the functional component inside the housing to be taken out without disassembling the housing.
